# EUROPEAN PATENT APPLICATION

(11) **EP 3 070 927 A1**
(43) Date of publication of application: **21.09.2016**
(21) Application number: 15159973.5
(22) Date of filing: 19.03.2015
(51) Int. Cl.: H04N 5/225, F16M 11/04, F16M 11/12, F16M 11/18, G01C 21/16

(54) **Stabilized camera system**

(71) Applicant: Strixmarine OÜ, 90420 Pulse küla (EE)
(72) Inventor: Tammet, Joel, 90420 Puise küla (EE)
(74) Representative: Nelsas, Tónu

(57) **Abstract**

The invention provides a stabilized camera system, primarily used in observation systems for maritime vessels. The stabilized camera system is autonomous and portative, making it easy to install and use. The control of the camera element and the transmission of the signal from the camera element is solved wirelessly, allowing the camera element along with the camera housing to be quickly transferred from one maritime vessel to another. Furthermore, the camera element can be controlled from the shore or another watercraft, while the camera image can be transmitted to the shore, the centre of search and rescue operations, as well as other vessels.

## Description

### Field of the invention

The invention relates to the field of technical observation equipment used on vehicles, and more specifically, stabilized cameras and their stabilization system. The invention provides a stabilized camera system.

### State of the art

Different cameras used with vehicles, as well as stabilization systems for the same for providing a clear image in case of oscillations, shocks, etc., are known from the art.

Visual navigation and observation is especially difficult at the sea due to the weather conditions there resulting in limited or non-existent visibility, especially in a fog, but also in the dark; as well as due to the unstable environment, resulting in the instability, unavailability or lack of sharpness of the image either due to a combination of all these factors or any of the factors taken independently.

For vision in the dark, devices registering electromagnetic radiation in the infrared spectrum of radiation, also known as thermal cameras or infrared cameras, are used, which convert thermal radiation with a wavelength of 7-15 µm, invisible to the human eye, into analogue video signals that can be displayed on a screen and enabling the human eye to see an image generated from the thermal radiation. The system does not require the visible portion of the spectrum in order to function, and produces an equally good image in both complete darkness as well as in the daylight, enabling maritime vessels to navigate more safely and participate in search and rescue operations in limited visibility or complete darkness.

The cameras known as the state of the art are rigidly attached to the camera base, meaning that they are not easily and quickly removable from the base, rendering them unfit for use on more than one vehicle or vessel. Most of these cameras are non-stabilized, meaning that the image they transmit is difficult to follow or unusable due to the inevitable swaying of the vehicle or vessel.

The accuracy and speed of stabilization of the known stabilized cameras are not sufficient to ensure the elimination of large amplitudes of oscillation and fast movements. The stabilizing technology currently used is based on electro-optic axis solutions, mechanical gyroscopes, or electronic gyroscopes. As an alternative, software stabilization of video images is used, but this has the weakness of a decrease in the resolution of the video image proportionally to the extent of stabilization. Servo-mechanisms and step motors are used as actuators, resulting in an inevitable delay in stabilization due to technical transitions. In addition to the slowness and inaccuracy of the stabilization, the currently used mechanic stabilization systems are relatively heavy, large in size, and tend to wear fast and require frequent maintenance due to their mechanical complexity.

The known stabilized camera solutions are not portative, meaning that they are attached to the camera base and connected with wires.

The possibilities of using stabilized cameras on medium and small vehicles or vessels are limited or non-existent due to the non-stabilized image and the large weight and dimensions of existing cameras, as well as the complexity of their installation and high cost.

### Summary of the invention

The invention is related to a stabilized camera system used in observation systems mounted on vehicles, especially watercraft.

The object of the invention is to provide an electro-mechanic stabilization solution for observation cameras used on watercraft, maritime vessels and in other physically unstable environments that would be accurate, fast, compact, light, with a minimum number of service parts and low acquisition costs, enabling the stabilized cameras to provide high-quality images with a stabilization accuracy of 0.01° or more, camera angle measurement frequency of 700 Hz (700 measurements per second) or more, at 9g or higher camera base rates of acceleration.

Furthermore, the stabilized camera system is autonomous, *i.e.*, the camera element does not require external power to operate and energy supply is solved using a quick charging battery system integrated in the camera.

The stabilized camera system is easy to install and use, as the camera element does not require cabling or wiring for installation, operation, or control. This means that control of the camera element and the transmission of signals from the camera element are provided using a wireless solution, enabling the camera element along with the camera housing to be quickly transferred from one vehicle or vessel to another. Furthermore, this allows the camera element to be controlled from a distance - *e.g.*, in the case of watercraft, from the shore or another vessel, with the possibility to transmit the camera image to the shore, to the rescue operations centre, or to another vessel.

The stabilized camera system is solved in a modular fashion, meaning that the user can replace the actively moving housing of the camera easily and without tools to adapt to the situation and requirements. In case of limited or non-existent visibility, an infrared camera element is connected to the stabilized camera system, with a normal camera element being used in daylight. In addition, this enables using cameras with different parameters based on the specific requirements without changing the stabilized camera system and control system.

The invention provides a lightweight, durable, low-power compact stabilized camera system that is suitable for using on small and unstable maritime vessels.

### List of figures

The preferred embodiments of the invention are now described referring to the attached figures, where:

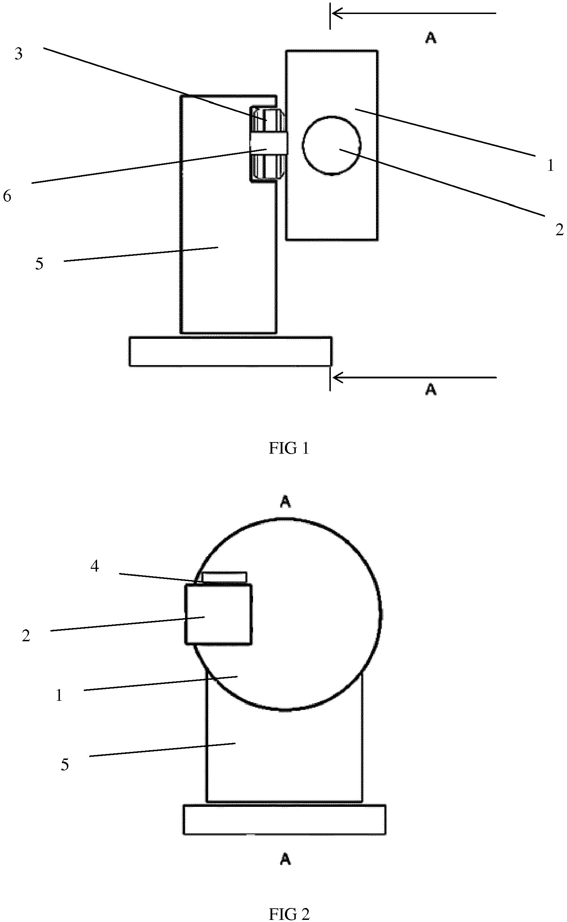

FIG 1: shows a front view of the stabilized camera system.
FIG 2: shows a view along the section A-A on FIG 1.

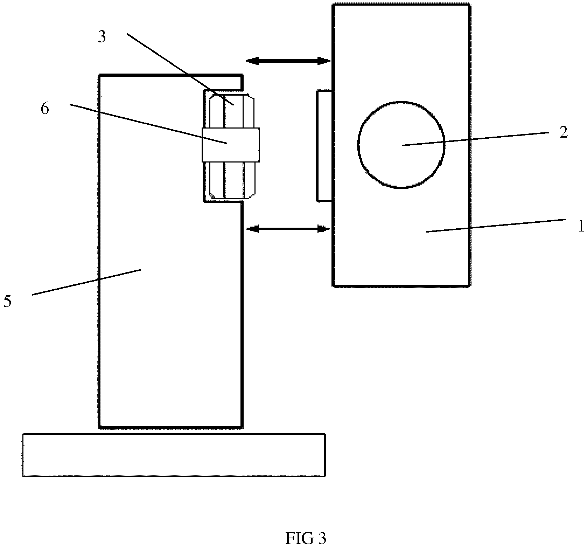

FIG 3: shows a front view of the stabilized camera system with the camera housing unattached.
FIG 4: shows a block diagram of the electronic circuit of the stabilized camera system.

### Exemplary embodiment of the invention

The stabilized camera system of the invention consists of an actively moving camera housing 1 containing a camera element 2 and an actuator mechanism 3, and a sensor element 4 and the waterproof housing of the camera system 5.

The camera element 2 is a normal camera element; in an alternative embodiment, a heat-sensitive camera element; or, in another alternative embodiment, contains both a normal as well as a heat-sensitive camera element. The camera element 2 or camera elements is/are mounted inside an aerodynamically symmetrical, actively moving camera housing 1 that ensures the equalization of the aerodynamic forces affecting the construction, independent of the direction and vector of the wind force affecting the system.

The actively moving camera housing 1 is rigidly attached to the actuator mechanism 3 without any intermediate mechanical transmission details; hence, there is no slack or inaccuracies in the connection between the camera housing and actuator mechanism compared to the existing camera stabilization systems utilizing servo actuators. The actively moving camera housing 1 is statically balanced around the horizontal axis to reduce the effect of the movement forces of the watercraft or other vehicle. As a result, the actuator mechanism 3 is small, making the entire stabilized camera system lightweight (total weight below 2 kg) and compact.

The actuator mechanism 3 is electric, providing rotary motion, and includes a hollow shaft 6 or hollow axle used for guiding connection wires from the actively moving camera housing to the waterproof housing 5 of the camera system, which the actuator mechanism 3 is attached to. The hollow shaft 6 is surrounded with an easily sliding seal ensuring the waterproofness of the actuator mechanism.

The actuator mechanism 3 consists of a stator and a rotor. The rotor consists of a housing turned from a non-magnetic metal alloy, on the inner surface of which neodymium magnets are glued with their poles oriented in the same direction. The housing is connected to the hollow shaft. The stator consists of an inner part turned from a non-magnetic metal alloy, with a radial bearing and a sliding seal pressed inside the core to fit the hollow shaft. The longitudinal translation of the hollow shaft 6 inside the radial bearing is stopped, on one side, with a turned step and on the other side, with a stop washer or other element inhibiting longitudinal movement.

The stator has radially attached poles with copper windings and steel cores, treated with composite resin to ensure their waterproofness. The copper windings of the stator are interconnected following a specific design to enable the windings to be activated in groups. The windings are connected into three groups. The poles of the stator are activated dynamically through a controller following a stabilization algorithm to provide the rotor with a magnetic field inducing the required direction of rotation.

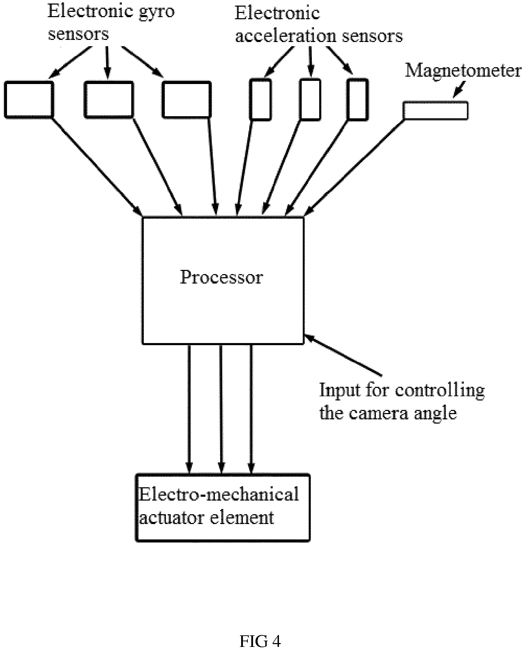

A sensor element 4 is rigidly installed inside the actively moving camera housing 1 that measures the angle of rotation and acceleration of the camera base. In a preferred embodiment, the sensor element 4 consists of three electronic gyro sensors, three electronic acceleration sensors, and one electronic magnetometer (see FIG 4). The information received from the sensor element 4 is implemented into signals transmitted to the actuator mechanism 3 through the control logic component, activating the windings of the stator in correspondence with the required direction and speed of rotation, until the actively moving camera housing 1 connected to the actuator has once again reached a pre-determined position. The angle is verified with a frequency of at least 700 Hz. Since the system lacks mechanical transmission parts that might cause mechanical delays and the information from the sensor element 4 is processed essentially instantly, the reaction of the actuator mechanism to the disruptive motion of the camera housing is also instant, ensuring an angular accuracy of 0.01° for the camera element even in case the camera housing is affected by high angular acceleration. To maximize the accuracy of stabilization, the actively moving camera housing 1 is statically balanced around a stabilizing axis.

The actively moving camera housing 1 is connected to the actuator mechanism 3 with a quick-release coupling and power plugs that enable the user to quickly and conveniently replace the camera element 2 if desired.

The parameters of the control logic can be changed and adjusted using a computer interface utilizing the USB protocol that allows adapting the output of the stabilizing logic to the stabilized mass and actuator mechanisms of different sizes, configurations, and power, in order to ensure maximally fast feedback to deviations, accurate maintenance of the position of the camera element, and the neutralization of self-amplifying feedback.

The stabilized camera system can be installed and controlled wirelessly; the transmission of the video image is also wireless. This enables the stabilized camera system to be quickly and easily transferred from one vehicle or vessel to another and does not require the installation of wires or cables, usually a laborious enterprise.

A wireless solution enables viewing the camera image on several separate monitors, as well as transmitting the camera image to another vehicle or vessel, or to the shore. The above features are especially useful in case of SAR (Search and Rescue) operations.

Both the camera element 2 and the control system (electronic circuit) are autonomous, *i.e.*, they do not require external power to operate. The camera element and the control system both have built-in batteries, providing the system with up to 24 hours of continuous operation with a single charge.

In addition, the camera system is equipped with a video recorder to record events or situation (especially in case of SAR events).

The stabilized camera system has a built-in GPS coordinate recorder and camera bearing recorder to enable the reconstruction of an event determining the location and viewing direction of the camera in a later investigation.

The desired angle of the actively moving housing 1 of the stabilized camera can be continuously and smoothly adjusted by the user between -90° and +90°, enabling the camera to be directed in the desired direction; the system will maintain the viewing angle of the camera with an accuracy of 0.01° or more independent of the oscillation of the waterproof housing of the camera system and the base of the stabilized camera.

The accurate stabilization solution of the invention is also used on smaller watercraft, unlike existing camera systems, as the stabilization speed and accuracy of the disclosed solution is comparable to the existing stabilized cameras, which are nearly 10 times or more as heavy, weighing 20 or more kilograms. The production costs and price of the stabilized camera system are several times lower than those of stabilized camera systems utilizing other technologies.

## Claims

1. A stabilized camera system comprising a camera element located inside an actively moving camera housing, a sensor element, an electro-mechanical actuator element, and a waterproof housing, **characterized in that** the actively moving camera housing is connected directly to the rotor of the actuator mechanism and the actively moving camera housing is statically balanced around a stabilized axis.

2. The stabilized camera system according to claim 1, **characterized in that** the actively moving camera housing is statically balanced around the horizontal axis.

3. The stabilized camera system according to claim 1, **characterized in that** the actively moving camera housing is connected to the rotor of the actuator mechanism with a quick-release coupling and power plugs.

4. The stabilized camera system according to claim 1, **characterized in that** the weight of the stabilized camera system is up to 2 kg.

5. The stabilized camera system according to claim 1, **characterized in that** the stabilized camera system is portable.

6. The stabilized camera system according to claim 1, **characterized in that** the stabilized camera system can be controlled wirelessly.

7. The stabilized camera system according to claim 1, **characterized in that** the transmission of the video image from the stabilized camera system is wireless.

8. The stabilized camera system according to claim 1, **characterized in that** the stabilized camera system has a built-in battery and the control system is autonomous.

9. The stabilized camera system according to claim 1, **characterized in that** the camera system has a built-in video recorder.

10. The stabilized camera system according to claim 1, **characterized in that** the camera system is equipped with a built-in GPS coordinate recorder and camera bearing recorder.

11. The stabilized camera system according to claim 1, **characterized in that** the sensor element of the camera system contains from one to three electronic gyro sensors, from one to three electronic acceleration sensors, and one electronic magnetometer.
